# EUROPÄISCHE PATENTSCHRIFT

(11) **EP 4 490 815 B1**
(45) Veröffentlichungstag und Bekanntmachung des Hinweises auf die Patenterteilung: **09.07.2025**
(21) Anmeldenummer: 23723584.1
(22) Anmeldetag: 05.05.2023
(51) Int. Cl.: H01R 4/48, H01R 13/6592, H02G 3/06, H02G 15/068, H01R 13/6582

(54) **KABELVERSCHRAUBUNG, VERWENDUNG EINER KABELVERSCHRAUBUNG UND KONTAKTELEMENT**
CABLE GLAND, USE OF A CABLE GLAND AND CONTACT ELEMENT
PRESSE-ÉTOUPE, UTILISATION D'UN PRESSE-ÉTOUPE ET ÉLÉMENT DE CONTACT

(30) Priorität: 05.05.2022 DE 102022111205
(43) Veröffentlichungstag der Anmeldung: 15.01.2025
(73) Patentinhaber: Pflitsch GmbH & Co. KG., 42499 Hückeswagen (DE)
(72) Erfinder: LECHNER, Martin, 51789 Lindlar (DE); VON OTTE, Robert, 58579 Schalksmühle (DE)
(74) Vertreter: Geskes, Christoph
(86) Internationale Anmeldenummer: PCT/EP2023/062002
(87) Internationale Veröffentlichungsnummer: WO 2023/214049

(56) Entgegenhaltungen:
- CN-U- 204 651 864
- DE-B4- 102008 018 205
- US-A1- 2016 076 568

## Beschreibung

Die Erfindung betrifft eine Kabelverschraubung und deren Verwendung. Kabelverschraubungen zur Sicherung einer elektromagnetischen Verträglichkeit sind aus dem Stand der Technik allgemein bekannt. So offenbart DE 10 2008 018 205 B4 eine Vorrichtung zur elektromagnetisch verträglichen Anordnung eines Kabels mit einem Kontaktierungsmittel aus einem gewendelten Federelement, wobei Windungen des Federelementes einen im Wesentlichen geraden Halteabschnitt aufweisen, der in Montagesolllage parallel zum Mantel der Durchführöffnung ausgerichtet ist, und wobei ein Stützbereich durch sich winklig an die geraden Halteabschnitte anschließende, im Wesentlichen gerade Windungsabschnitte gebildet ist, wobei die Windungen des Federelements im Querschnitt eine Form eines gleichschenkligen Dreiecks aufweisen.

CN 204651864 U offenbart eine Kabelverschraubung mit einem Kontaktelement mit gleich geformten Windungen, die jeweils trapezförmig ausgestaltet sind. US 2016/0076568 A1 offenbart ein Kontaktelement für einen Miniaturschalter.

Aus dem Stand der Technik bekannte Kabelverschraubungen haben den Nachteil, dass diese bei der Montage eines Langformteils in eine ein Kontaktelement aufweisende Kabelverschraubung leicht verkippen oder verklemmen. Insbesondere bei kleinen Kabeldurchmessern relativ zu einer Kammer der Kabelverschraubung, in der das Kontaktelement angeordnet ist, kommt es zu Verwindungen der aus dem Stand der Technik bekannten Kabelverschraubungen, wodurch entweder die Montage erschwert oder die elektrische Kontaktierung nicht optimal gewährleistet ist. Weiterhin ist die Montage von biegeschlaffen Kabeln in die Kabelverschraubung aus den vorstehenden Gründen nicht komfortabel.

Aufgabe der Erfindung ist es daher, eine Kabelverschraubung zu verbessern. Insbesondere ist Aufgabe der Erfindung, eine Kabelverschraubung zur Verfügung zu stellen, die komfortabel zu montieren ist. Insbesondere ist Aufgabe der Erfindung, eine Kabelverschraubung zur Verfügung zu stellen, die eine sichere elektrische Kontaktierung ermöglicht. Insbesondere ist die Aufgabe der Erfindung, eine Kabelverschraubung zur Verfügung zu stellen, die eine Montage eines biegeschlaffen Langformteils einfach möglich macht.

Die Aufgabe wird erfindungsgemäß mittels einer Kabelverschraubung umfassend ein Bauteil und mindestens ein Kontaktelement gelöst, wobei das mindestens eine Kontaktelement eine Mehrzahl von im Wesentlichen geometrisch gleich geformten Windungen umfasst, wobei jede Windung einen Halteabschnitt zur elektrischen Kontaktierung des das Kontaktelement umgebenden Bauteils, mindestens einen ersten und einen zweiten Stützabschnitt zur elektrischen Kontaktierung eines Schirms eines Langformteils und einen ersten und einen zweiten Erstreckungsabschnitt umfasst, wobei der Halteabschnitt, der erste Erstreckungsabschnitt und die zwei Stützabschnitte einander nachfolgend angeordnet sind und der erste Stützabschnitt und der zweite Stützabschnitt aneinander grenzen.

Weiterhin wird die Aufgabe erfindungsgemäß gelöst mittels einer Verwendung einer oben beschriebenen Kabelverschraubung für die elektrische Kontaktierung zumindest eines Schirmes zumindest eines Langformteils.

Das Kontaktelement umfasst eine Mehrzahl von im Wesentlichen geometrisch gleich geformten Windungen. Jede Windung umfasst einen Halteabschnitt zur elektrischen Kontaktierung eines das Kontaktelement umgebenden Bauteils, mindestens einen Stützabschnitt zur elektrischen Kontaktierung eines Schirms eines Langformteils und einen ersten und einen zweiten Erstreckungsabschnitt. Der Halteabschnitt, der erste Erstreckungsabschnitt und der zumindest eine Stützabschnitt sind nachfolgend aneinander angeordnet. Bevorzugt ist der zweite Erstreckungsabschnitt dem zumindest einen Stützabschnitt nachfolgend angeordnet.

Im Sinne der Erfindung ist unter "geometrisch gleich" zu verstehen, dass die Formgebung der Windungen, insbesondere in einer Ansicht jeweils auf eine Windung in Umfangsrichtung des Kontaktelementes, im Wesentlichen kongruent sind. Insbesondere sind die Projektionen der Windungen jeweils auf eine Ebene, auf der ein Radius ausgehend von einer Mittellängsachse des Kontaktelementes angeordnet ist und die die jeweilige Windung zumindest schneidet, bevorzugt einen Halteabschnitt der Windung zumindest schneidet, im Wesentlichen deckungsgleich.

Der Begriff "im Wesentlichen" gibt einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

Die Windungen im Sinne der vorliegenden Anmeldung sind durch eine Anfangsstelle und eine Endstelle definiert. Bevorzugt ist die Durchgangsöffnung durch die Windungen definiert, bevorzugt durch die Stützabschnitte der Windungen, weiter bevorzugt durch Radialabschnitte, die erste und zweite Stützabschnitte jeweils einer Windung verbinden. In einer Ausgestaltung weisen Anfangsstelle und Endstelle den gleichen Abstand zur Mittellängsachse des Kontaktelementes auf. Alternativ können Anfangsstelle und Endstelle einen unterschiedlichen Abstand zur Mittellängsachse des Kontaktelementes aufweisen. Die einzelne Windung erstrecken sich gewunden zwischen Anfangsstelle und Endstelle. Bevorzugt ist die Anfangsstelle und/oder die Endstelle in einem Übergang, bevorzugt vor oder nach einem Radialabschnitt, vom zweiten Erstreckungsabschnitt einer Windung zu einem Halteabschnitt der nächsten Windung angeordnet. Im Sinne der vorliegenden Erfindung gelten Halteabschnitt, Erstreckungsabschnitt und/oder Stützabschnitt als nicht durch die Anfangsstelle und/oder Endstelle unterteilt. Schneidet man beispielsweise das Kontaktelement in der Ebene der Anfangsstelle und der Endstelle an einem Übergang zwischen den zweiten Erstreckungsabschnitten und den Halteabschnitten entlang eines Umfangs des Kontaktelementes auf, zerfällt dieses in die einzelnen Windungen.

In einer Ausgestaltung ist vorgesehen, dass der erste und/oder der zweite Erstreckungsabschnitt sich gradlinig erstrecken. In einer weiteren Ausgestaltung ist vorgesehen, dass der erste und/oder der zweite Erstreckungsanschnitt sich bogenförmig erstrecken. Bevorzugt wölbt sich der erste und/oder der zweite Erstreckungsabschnitt in Richtung der Mittellängsachse. Weiter bevorzugt wölben sich die ersten und/oder die zweiten Erstreckungsabschnitte derart, dass eine Einhüllende des Kontaktelements eine konkave Fläche im Bereich der ersten und/oder zweiten Erstreckungsabschnitte aufweist. Weiter bevorzugt wölben sich die ersten und/oder die zweiten Erstreckungsabschnitte derart, dass eine Einhüllende des Kontaktelements eine konvexe Fläche im Bereich der ersten und/oder zweiten Erstreckungsabschnitte aufweist. In einer weiteren Ausgestaltung ist vorgesehen, dass sich der erste und/oder der zweite Erstreckungsabschnitt grade oder gebogen in einer Ebene erstreckt, deren Normale die Mittellängsachse ist.

Im Sinne der Erfindung ist eine Einhüllende des Kontaktelements eine gedachte Fläche, die jede Windung des Kontaktelements bevorzugt außenseitig berührt.

In einer Ausgestaltung ist vorgesehen, dass im eingesetzten Zustand der Durchmesser der Durchgangsöffnung gleich groß wie im nicht eingesetzten Zustand, insbesondere wenn der Außendurchmesser des nicht eingesetzten Kontaktelements kleiner oder gleich dem Innendurchmesser des Bauteils ist. Bevorzugt wird zumindest im verbauten Zustand durch Einführen des Langformteils zumindest der Außendurchmesser des Kontaktelements derart aufgeweitet, so dass die Halteabschnitte die Innenwandung des Bauteils elektrisch kontaktieren. Weiter bevorzugt ist im eingesetzten Zustand der Durchmesser der Durchgangsöffnung kleiner als im nicht eingesetzten Zustand. Weiter bevorzugt ist im eingesetzten Zustand der Durchmesser der Durchgangsöffnung gleich groß wie im nicht eingesetzten Zustand.

In einer Ausgestaltung ist vorgesehen, dass der minimale Durchmesser der Durchgangsöffnung ein Bruchteil eines Einbaudurchmessers der Kontaktfeder ist. Bevorzugt ist der minimale Durchmesser der Durchgangsöffnung ein Durchmesser der Durchgangsöffnung im eingesetzten Zustand des Kontaktelementes.

Bevorzugt ist der Einbaudurchmesser der Außendurchmesser des Kontaktelementes im eingebauten Zustand. Bevorzugt ist der Einbaudurchmesser ein Innendurchmesser des Bauteils, in welches das Kontaktelement einsetzbar ist und für welches das Kontaktelement vorgesehen ist.

Bevorzugt ist das Verhältnis von Durchgangsöffnung zu Einbaudurchmesser etwa 0,1 bis etwa 0,7, weiter bevorzugt etwa 0,15 bis etwa 0,5, weiter bevorzugt etwa 0,2 bis etwa 0,3.

In einer Ausgestaltung ist vorgesehen, dass die Durchgangsöffnung einen maximalen Durchmesser aufweist. Der maximale Durchmesser ist ein Durchmesser der Durchgangsöffnung im verbauten Zustand, also mit eingeführten Langformteil. Bevorzugt sind die Windungen durch das Langformteil im Wesentlichen maximal ausgelenkt. Bevorzugt ist der maximale Durchmesser etwa 1,5-mal so groß bis etwa 1,8-mal so groß, bevorzugt etwa 2-mal so groß bis etwa 5-mal so groß, weiter bevorzugt etwa 2,5-mal so groß bis etwa 3-mal so groß, wie der minimale Durchmesser der Durchgangsöffnung.

In einer Ausgestaltung, in der die Windungen im nicht eingesetzten Zustand in einer Aufsicht auf das Kontaktelement in Richtung der Mittellängsachse eine Ausrichtung aufweisen, die winklig zum Radius auf die Mittellängsachse ist, kann bei der Montage des Kontaktelementes in das Bauteil eine Ausrichtung der Windungen geändert werden. Bevorzugt vergrößert sich der Winkel der Ausrichtung, der vom Radius auf die Mittellängsachse abweicht, bei der Montage in das Bauteil und/oder bei Durchführung eines Langformteils, insbesondere wenn das Kontaktelement im Bauteil eingesetzt ist.

In einer Ausgestaltung ist vorgesehen, dass die Grundform der Windungen, gesehen in einer Ansicht auf die jeweilige Windung in Umfangsrichtung, hausförmig ausgestaltet ist, wobei bevorzugt der zumindest eine Stützabschnitt ein Dach formt, wobei bevorzugt der erste und der zweite Erstreckungsabschnitt Wände formen und wobei bevorzugt der Halteabschnitt ein Fundament beziehungsweise Boden formt.

Bevorzugt ist das Kontaktelement zur Kontaktierung zumindest eines Schirmes eines Langformteils ausgestaltet.

Das Langformteil im Sinne der Erfindung umfasst zumindest einen länglichen, insbesondere biegsamen, besonders bevorzugt biegeschlaffen, Körper ausgewählt aus einer Gruppe umfassend Kabel, Schläuche und/oder Rohre. Bevorzugt ist mindestens ein Langformteil durch das Kontaktelement durchführbar. Weiter bevorzugt ist das mindestens eine Langformteil durch das im Bauteil montierte Kontaktelement durchführbar. Bevorzugt weist das Langformteil einen elektromagnetischen Schirm auf, der weiter bevorzugt im Bereich, in der das Kontaktelement anliegt, beziehungsweise im Bereich einer Kabelverschraubung zumindest teilweise abisoliert ist.

Das Kontaktelement umfasst bevorzugt einen Draht, der die Windungen formt. Der Draht weist einen Drahtdurchmesser auf. Im Sinne der Erfindung ist unter dem Drahtdurchmesser ein Durchmesser des Drahtes quer zur Längserstreckung des Drahtes, der die einzelnen Windungen formt, zu verstehen. In einer Ausgestaltung ist der Draht metallisch, elektrisch leitend und bevorzugt federelastisch. In einer Ausgestaltung ist vorgesehen, dass der Draht, der die einzelnen Windungen formt, einen im Wesentlichen kreisförmigen Querschnitt aufweist. In einer Ausgestaltung weist der Draht, der die einzelnen Windungen formt, einen von einer Kreisform abweichenden Querschnitt auf. In einer Ausgestaltung weist der Draht einen viereckigen, bevorzugt einen rechteckigen, weiter bevorzugt einen quadratischen Querschnitt auf.

Im Sinne der Erfindung ist ein Querschnitt ein Schnitt quer zu einer Längserstreckung.

Das Kontaktelement wird in der vorliegenden Erfindung in einem unverbauten Zustand beschrieben, wenn nicht anders angegeben ist. Ist das Kontaktelement in einer Kammer eines Bauteils, beispielsweise einer Kabelverschraubung, eingesetzt, befindet sich das Kontaktelement in einem eingesetzten Zustand. Ist ein Langformteil in der Kammer eines Bauteils mit dem Kontaktelement angeordnet, befindet sich das Kontaktelement in einem verbauten Zustand.

Das Kontaktelement weist bevorzugt eine Durchtrittsöffnung auf, die weiter bevorzugt von den Windungen umgeben beziehungsweise von diesen definiert ist. Wird mindestens ein Langformteil in das Kontaktelement eingebracht, insbesondere durch die Durchtrittsöffnung geführt, wird dieses je nach Durchmesser des mindestens einen Langformteils oder einer Einhüllenden, die von einer Vielzahl von Langformteilen gebildet wird, vorteilhaft von den Windungen kontaktiert. Insbesondere wenn das oder die Langformteile in einem Kontaktbereich einen freiliegenden elektromagnetischen Schirm aufweisen, kann ein elektrischer Strom zwischen Schirm und Kontaktelement fließen, ein Spannungsausgleich stattfinden und/oder insbesondere das oder die Langformteile geerdet werden. Bevorzugt kann ein elektrischer Strom zwischen Schirm und Kontaktelement fließen, ein Spannungsausgleich stattfinden und/oder insbesondere das oder die Langformteile geerdet werden, wenn das Kontaktelement mit dem Bauteil, das bevorzugt elektrisch geerdet ist, elektrisch verbunden ist. Durch die sichere elektrische Verbindung von Langformteil und Bauteil, die durch das Kontaktelement ermöglicht ist, wird vorteilhaft eine elektromagnetische Verträglichkeit sichergestellt.

Vorteilhaft an dem vorgeschlagenen Kontaktelement ist, dass dieses verwindungssteifer ist als aus dem Stand der Technik bekannte Kontaktelemente. Vorteilhaft wird bei der Montage beziehungsweise Einführung des insbesondere biegeschlaffen Langformteils durch die Durchtrittsöffnung des Kontaktelementes, das in eine Kammer eines Bauteils eingesetzt ist, das Kontaktelement in der Kammer nicht verkippt und/oder verwunden. Hierdurch wir eine sichere und einfache Montage gewährleistet. Besonders vorteilhaft ist die Montage von biegeschlaffen Langformteilen, wie beispielsweise Kabeln, sehr komfortabel mit dem vorgeschlagenen Kontaktelement möglich. Weiterhin vorteilhaft liegen die Erstreckungsabschnitte der einzelnen Windungen auf einer Stirnseite und/oder auf zumindest einem beispielsweise innen radial umlaufenden Absatz des Bauteils auf. Dies stabilisiert das Kontaktelement in der Kammer und bietet zudem eine größere elektrische Kontaktfläche, über die ein elektrischer Strom und/oder ein Wärmestrom abgeleitet werden kann. Insbesondere kann eine radiale Erstreckung des zumindest teilweise radial umlaufenden Absatzes, der die Feder in der Kammer sichert, bevorzugt im Wesentlichen vollständig als elektrische Kontaktfläche genutzt werden. Bei im Querschnitt dreieckig geformten Federn ist hingegen nur eine punktuelle elektrische Kontaktierung zwischen Feder und Absatz und/oder Stirnfläche möglich.

Jede Windung des Kontaktelementes weist einen Halteabschnitt auf. Dieser ist bevorzugt geradlinig ausgestaltet. Bevorzugt ist der Halteabschnitt zur elektrischen Kontaktierung mit einem Bauteil ausgestaltet, in dessen Kammer das Kontaktelement einsetzbar ist beziehungsweise angeordnet ist. Weiter bevorzugt ist der Halteabschnitt mit einer Innenwandung des Bauteils, beispielsweise der Kabelverschraubung kontaktierbar. Bevorzugt ist unter der Innenwandung die beispielsweise zylindrisch umlaufende Wandung des Bauteils zu verstehen, die in einer Ausgestaltung stirnseitig von zumindest einem radial umlaufenden Absatz begrenzt ist.

In einer Ausgestaltung ist der Halteabschnitt oder eine Projektion des Halteabschnittes in einer Ansichtsebene, auf der die Mittellängsachse angeordnet ist, in einem Winkel oder parallel zur Mittellängsachse angeordnet. In einer Ausgestaltung ist vorgesehen, dass der mindestens eine Halteabschnitt geradlinig ausgebildet ist, und weiter bevorzugt zu einer mittig durch die Durchgangsöffnung gehenden Mittellängsachse des Kontaktelementes einen Winkel in einem Bereich von etwa -50° bis etwa +50°, bevorzugt etwa - 45° bis etwa +45°, weiter bevorzugt etwa -30° bis etwa +30°, aufweist - bevorzugt in einer Ansicht radial auf die Mittellängsachse, bei der die Mittellängsachse und der Halteabschnitt auf der Ansichtsebene angeordnet sind beziehungsweise der Halteabschnitt die Ansichtsebene schneidet oder ebenfalls auf dieser angeordnet ist. In einer weiteren Ausgestaltung ist vorgesehen, dass in einer Ansicht radial auf die Mittellängsachse ein Halteabschnitt, das in einer Projektion auf die Ansichtsebene von der Mittellängsachse etwa mittig geschnitten wird oder mit dieser im Wesentlichen zusammenfällt, der Winkel zwischen Halteabschnitt und Mittellängsachse etwa -10° bis etwa +10° beträgt.

Insbesondere kann um das Kontaktelement eine Einhüllende gelegt werden. Die Einhüllende ist eine gedachte Fläche, die jede Windung, bevorzugt jeden Abschnitt jeder Windung des Kontaktelementes berührt. Die Einhüllende bildet im Bereich der Halteabschnitte eine Mantelfläche aus. Bevorzugt ist die Mantelfläche der Einhüllenden des Kontaktelementes im Wesentlichen konisch oder zylindrisch geformt. Die sich aus der Mantelfläche ableitende konische Formgebung des Kontaktelementes hat den Vorteil, dass das Kontaktelement sich leicht in ein insbesondere innen zylindrisch ausgestaltetes Bauteil beziehungsweise eine Kammer des Bauteils einbringen lässt. Insbesondere können sich die angewinkelten beziehungsweise eine Mantelfläche der konischen Einhüllenden bildenden Halteabschnitte an die Innenwandung des Bauteils beziehungsweise der Kammer anlegen, wobei sich die Windungen in einer Aufsicht auf das Kontaktelement in Richtung der Mittellängsachse bevorzugt winkelig zum Radius auf die Mittellängsachse ausrichten. Beispielweise legen sich die Halteabschnitte in einem eingesetzten Zustand und/oder einem verbauten Zustand an die Innenwandung der Kammer an und werden entsprechend der Formgebung der Innenwandung verformt. So kann beispielsweise eine zylindrische Innenwandung der Kammer das Kontaktelement derart verformen, dass die Mantelfläche der Einhüllenden des eingesetzten oder verbauten Kontaktelements zylindrisch ausgestaltet ist.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet, insbesondere ist ein Toleranzbereich von ±20 %, bevorzugt ±10 %, weiter bevorzugt ±5 %, vorgesehen. Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar. Der Begriff "im Wesentlichen" gibt im Rahmen der Erfindung einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

Beispielhafte Aufzählungen sind im Sinne der Erfindung als nicht abschließend anzusehen, sondern können im Rahmen des allgemeinen Fachwissens ergänzt werden.

Das Kontaktelement weist zumindest einen Stützabschnitt zur elektrischen Kontaktierung eines Schirms eines Langformteils auf. In einer Ausgestaltung ist vorgesehen, dass der zumindest eine Stützabschnitt bogenförmig oder kreissegmentförmig zwischen dem ersten Erstreckungsabschnitt und dem zweiten Erstreckungsabschnitt angeordnet ist. In einer bevorzugten Ausgestaltung ist vorgesehen, dass ein erster Stützabschnitt und ein zweiter Stützabschnitt vorgesehen sind. Bevorzugt sind der erste und der zweite Stützabschnitt im Wesentlichen geradlinig ausgebildet. Erfindungsgemäß ist vorgesehen, dass die Windungen einen ersten Stützabschnitt und einen zweiten Stützabschnitt aufweisen, die aneinandergrenzen. In einer Ausgestaltung ist vorgesehen, dass die Stützabschnitte einen Winkel von etwa 30° bis etwa 130°, bevorzugt etwa 60° bis 110°, weiter bevorzugt etwa 45° bis etwa 90°, zueinander aufweisen.

In einer Ausgestaltung ist vorgesehen, dass der erste Stützabschnitt und der zweite Stützabschnitt etwa gleich lang sind.

In einer Ausgestaltung ist vorgesehen, dass der zumindest eine Stützabschnitt, bevorzugt der erste und der zweite Stützabschnitt, jeweils an einen Erstreckungsabschnitt grenzt.

Das Kontaktelement weist einen ersten Erstreckungsabschnitt und einen zweiten Erstreckungsabschnitt auf, die sich bevorzugt jeweils geradlinig erstrecken. Bevorzugt sind der erste Erstreckungsabschnitt und der zweite Erstreckungsabschnitt auf parallelen Ebenen angeordnet. Bevorzugt sind der erste Erstreckungsabschnitt und der zweite Erstreckungsabschnitt im eingesetzten Zustand auf parallelen Ebenen angeordnet. Bevorzugt sind der erste Erstreckungsabschnitt und der zweite Erstreckungsabschnitt im verbauten Zustand auf parallelen Ebenen angeordnet. Weiter bevorzugt bildet eine Einhüllende des Kontaktelementes im Bereich des ersten Erstreckungsabschnitts und/oder im Bereich des zweiten Erstreckungsabschnitts eine konische Fläche aus, bevorzugt im nicht eingesetzten, eingesetzten und/oder verbauten Zustand.

In einer Ausgestaltung ist vorgesehen, dass der erste Erstreckungsabschnitt und der zweite Erstreckungsabschnitt im Wesentlichen gleich lang ausgestaltet sind. Bevorzugt ist der Abstand zwischen Halteabschnitt und Stützabschnitt einer Windung die Länge des Erstreckungsabschnittes.

Weiter bevorzugt definiert ein größter Abstand zwischen Halteabschnitt und Stützabschnitt, bevorzugt ein Abstand zwischen einem radial äußersten Punkt des Halteabschnittes und einem radial innersten Punk des Stützabschnittes, eine radiale Erstreckung des Kontaktelementes.

Bevorzugt ist das Verhältnis der Länge des Erstreckungsabschnittes und der radialen Erstreckung des Kontaktelementes etwa 0,1 bis etwa 0,45, bevorzugt etwa 0,2 bis etwa 0,4, weiter bevorzugt etwa 0,3 bis etwa 0,35.

In einer Ausgestaltung ist vorgesehen, dass das Verhältnis der Länge des Erstreckungsabschnittes zum Einbaudurchmesser des Kontaktelementes etwa 0,5 bis etwa 1, bevorzugt etwa 0,25 bis etwa 0,46, weiter bevorzugt etwa 0,3 bis etwa 0,44, beträgt.

In einer Ausgestaltung ist vorgesehen, dass der Erstreckungsabschnitt zum Halteabschnitt insbesondere im eingesetzten Zustand einen Winkel von etwa 80° bis etwa 100°, bevorzugt etwa 80° bis etwa 90°, weiter bevorzugt etwa 80° bis etwa 89°, weiter bevorzugt etwa 85°, umfasst. Es hat sich überraschend gezeigt, dass der Sitz des Kontaktelementes insbesondere in einer Kabelverschraubung auch beim Einführen oder Herausziehen eines Langformteiles, insbesondere eines Kabels, sicherer ist, wenn der Winkel zwischen Erstreckungsabschnitt und Halteabschnitt kleiner etwa 90° ist. Insbesondere kann der Winkel zwischen Halteabschnitt und Erstreckungsabschnitt derart gewählt sein, dass dieser auch bei produktionstechnischen Toleranzabweichungen etwa 90° nicht überschreitet.

In einer Ausgestaltung ist vorgesehen, dass der Halteabschnitt, der erste Erstreckungsabschnitt, der zweite Erstreckungsabschnitt und/oder der mindestens eine erste und eine zweiteStützabschnitt im Wesentlichen geradlinig ausgestaltet sind.

In einer Ausgestaltung ist vorgesehen, dass der Halteabschnitt an den ersten Erstreckungsabschnitt grenzt, wobei der erste Erstreckungsabschnitt an zumindest einen Stützabschnitt grenzt, und wobei der zumindest eine Stützabschnitt an den zweiten Erstreckungsabschnitt grenzt. Bevorzugt grenzt der zweite Stützabschnitt an den ersten Stützabschnitt. Weiter bevorzugt grenzt der zweite Erstreckungsabschnitt an den Halteabschnitt der nächsten Windung.

In einer Ausgestaltung ist vorgesehen, dass zwischen dem Halteabschnitt und dem ersten und dem zweiten Erstreckungsabschnitt und/oder zwischen dem mindestens einen ersten und einen zweiten Stützabschnitt und dem ersten und zweiten Erstreckungsabschnitt ein Radialabschnitt ausgebildet ist. Bevorzugt ist der Radialabschnitt möglichst klein ausgebildet. Weiter bevorzugt stellt der Radialabschnitt den technisch notwendigen Biegeradius dar, der zwischen den einzelnen Abschnitten angeordnet ist. In einer Ausgestaltung ist vorgesehen, dass der Radialabschnitt größer als technisch notwendig ist. Im Sinne der Erfindung grenzen Halteabschnitt, erster Erstreckungsabschnitt, der mindestens eine erste und eine zweite-Stützabschnitt und der zweite Erstreckungsabschnitt jeweils aneinander, auch wenn ein Radialabschnitt zwischen diesen angeordnet ist.

Die einzelnen Windungen des Kontaktelementes können in einer Aufsicht auf die Windungen, bevorzugt im Längsschnitt des Kontaktelementes, als hausförmig beschrieben werden. Bei der Hausform der Windungen stellt bevorzugt der Halteabschnitt einen Boden, die Erstreckungsabschnitte die Wände und der zumindest eine Stützabschnitt das Dach dar, wobei bevorzugt ein erster und ein zweiter Stützabschnitt ein Satteldach formen beziehungsweise andeuten. Bevorzugt lässt sich Windung in einer Ansicht in Umfangsrichtung mit dem Unicode-Zeichen 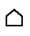 (U+2302) beschreiben.

In einer Ausgestaltung ist vorgesehen, dass das Kontaktelement ringförmig oder torusförmig ausgestaltet ist. Bevorzugt ist die ringförmig oder torusförmig ausgebildete Feder in sich geschlossen, weiter bevorzugt durch Verbinden beziehungsweise Fügen der Enden zu einem Ring beziehungsweise Torus geformt. Weiter bevorzugt umfasst das Kontaktelement eine gewendelte, ringförmig geschlossene Feder, bevorzugt aus einem drahtförmigen Material. In einer Ausgestaltung umfasst das Kontaktelement zumindest ein elektrisch leitendes Material. Bevorzugt umfasst das Kontaktelement zumindest ein Material ausgewählt aus einer Gruppe umfassend Stahl, Federstahl, Kupfer, Gold, Messing und/oder Kohlenstoff und dessen Modifikationen. Weiterhin ist eine Einhüllende des Kontaktelements im Wesentlichen wie ein Torus ausgebildet.

Bevorzugt ist das Kontaktelement derart ausgestaltet, dass dieses sich einer Kammer anpassen kann, die eine zylindrische oder nicht zylindrische Innenwandung aufweist.

In einer Ausgestaltung ist vorgesehen, dass die Windungen des Kontaktelementes zumindest im eingesetzten Zustand und/oder in einem nicht eingesetzten Zustand eine radiale Ausrichtung aufweisen. In einer Ausgestaltung des Kontaktelementes, in der der Halteabschnitt bevorzugt im Wesentlichen parallel zur Mittellängsachse angeordnet ist, projizieren in einer Aufsicht auf das Kontaktelement in Richtung der Mittellängsachse die einzelnen Windungen bevorzugt jeweils zwei Schenkel auf eine Ansichtsebene. Dies ist insbesondere bei einer zylindrischen Formgebung des Kontaktelementes der Fall, beispielsweise im eingesetzten Zustand. Die Ansichtsebene ist im gegebenen Fall eine Ebene, deren Normale die Mittellängsachse des Kontaktelementes ist. Bevorzugt sind die beiden auf die Ansichtsebene projizierten Schenkel bevorzugt des Erstreckungsabschnittes, weiter bevorzugt zumindest des zumindest einen Stützabschnittes und des Erstreckungsabschnittes, an einer Scheitelstelle miteinander verbunden. Bevorzugt ist die Scheitelstelle die Verbindung des ersten Stützabschnittes mit dem zweiten Stützabschnitt. Die Winkelhalbierende der beiden Schenkel ist im Folgenden die Ausrichtung der Windungen. Fällt die Ausrichtung der Windungen mit einem Radius des Kontaktelementes auf die Mittellängsachse zusammen oder ist um etwa ± 5° vom Radius auf die Mittellängsachse abgewinkelt, sind die Windungen im Sinne der vorliegenden Anmeldung im Wesentlichen radial ausgerichtet. In dieser Ausgestaltung weisen in einem nicht eingesetzten oder eingesetzten Zustand des Kontaktelementes die Windungen eine im Wesentlichen radiale Ausrichtung auf. Weicht die Winkelhalbierende respektive die Ausrichtung der Windungen von dem Radius des Kontaktelementes auf die Mittellängsachse um mehr als etwa ±5°, bevorzugt um etwa ±6° bis etwa ±80° ab, weist die Windung eine vom Radius auf die Mittellängsachse abweichende Ausrichtung auf, beispielsweise im verbauten Zustand.

In einer weiteren Ausgestaltung ist vorgesehen, dass die Windungen in einem nicht eingesetzten Zustand und/oder eingesetzten Zustand eine Ausrichtung aufweisen, die etwa ±6° bis etwa ±30°, bevorzugt etwa ±6° bis etwa ±15°, weiter bevorzugt etwa ±6° bis ±10°, vom Radius auf die Mittellängsachse abweichen. Weiter bevorzugt weichen alle Windungen etwa um den gleichen Winkel, bevorzugt in die gleiche Richtung, gegen den Uhrzeigersinn oder mit dem Uhrzeigersinn, zum Radius auf die Mittellängsachse ab.

In einer Ausgestaltung ist vorgesehen, dass das Kontaktelement eine Mehrzahl von Windungen aufweist. In einer Ausgestaltung ist vorgesehen, dass eine nominelle Windungszahl Wₙ des Kontaktelements von der radialen Erstreckung des Kontaktelementes Eᵣ, von dem Einbaudurchmesser D_{E} und von dem Drahtdurchmesser D_{D} abhängt. Bevorzugt kann die nominelle Windungszahl des Kontaktelementes durch die Formel Wₙ=(D_{E}-2·Eᵣ) π/D_{D} beschrieben werden. Die nominale Windungszahl gibt bevorzugt die theoretische, bevorzugt maximale ,Anzahl der Windungen für den minimalen Durchmesser der Durchgangsöffnung wieder. In einer Ausführungsform ist das Kontaktelement mit einer Anzahl von Windungen ausgeführt, die zur nominellen Windungszahl in einem Verhältnis von etwa 0,33 bis etwa 3, bevorzugt etwa 0,4 bis etwa 2,5, weiter bevorzugt etwa 0,5 bis etwa 2, ist. In einer weiteren Ausführungsform ist das Kontaktelement mit einer Anzahl von Windungen ausgeführt, die zur nominellen Windungszahl in einem Verhältnis von etwa 1 bis etwa 3, bevorzugt etwa 1 bis etwa 2,5, weiter bevorzugt etwa 1 bis etwa 2, ist. Vorteilhaft können durch das Vorsehen der Erstreckungsabschnitte die Windungen des Kontaktelements im unverbauten und eingesetzten Zustand derart verwinden beziehungsweise auslenken, dass mehr Windungen ausgeführt werden können, als die nominelle Windungszahl vorgibt. Vorteilhaft ist durch das Vorsehen der Erstreckungsabschnitte weiterhin die Auslenkung der Windungen bevorzugt im eingesetzten Zustand derart definiert, dass ein vorgesehener minimaler Durchmesser der Durchgangsöffnung gebildet werden kann.

In einer beispielhaften Ausgestaltung ist vorgesehen, dass das Kontaktelement eine Vielzahl von im Wesentlichen gleich ausgestalteten Windungen umfasst. Die einzelnen Windungen umfassen beispielhaft einen Halteabschnitt, einen ersten Erstreckungsabschnitt, einen ersten Stützabschnitt, einen zweiten Stützabschnitt und einen zweiten Erstreckungsabschnitt. Zwischen dem Halteabschnitt ersten Erstreckungsabschnitt ist ein erster Radialabschnitt angeordnet. Ein zweiter Radialabschnitt ist zwischen ersten Erstreckungsabschnitt und ersten Stützabschnitt angeordnet. Ein dritter Radialabschnitt ist zwischen dem ersten Stützabschnitt und dem zweiten Stützabschnitt angeordnet. Ein vierter Radialabschnitt ist zwischen dem zweiten Stützabschnitt und dem zweiten Erstreckungsabschnitt angeordnet. Die Radialabschnitte bilden beispielhaft jeweils den Übergang zwischen den angrenzenden linearen Abschnitten, die aneinander grenzen und in einem Winkel zueinander stehen.

In einer beispielhaften Ansichtsebene in Richtung des Umfangs des Kontaktelements kann eine Windung als hausförmig beschrieben werden, wobei der erste und der zweite Stützabschnitt als Dach beschreiben werden kann, an denen die Hauswände aus den ersten und zweiten Erstreckungsabschnitten grenzen und wobei der Halteabschnitt den Boden bildet.

Die Windungen sind in einem nicht eingesetzten Zustand beispielhaft radial ausgerichtet, wobei durch die Stützabschnitte eine Durchgangsöffnung gebildet wird, durch die ein nicht gezeigtes Langformteil führbar ist.

Wenn das Kontaktelement beispielhaft in eine Kammer der Kabelverschraubung eingesetzt ist, ist dieses radial gestaucht. Ein Abstand zwischen den Stützabschnitten beziehungsweise der Radialabschnitte zwischen den ersten und zweiten Stützabschnitten angrenzender Windungen ist durch die radiale Stauchung in der Kammer ist geringer als der Abstand zwischen den Windungen im nicht eingesetzten Zustand. In einer Ausgestaltung berühren sich die Stützabschnitte der Windungen beziehungsweise eine Lücke zwischen diesen ist vollständig geschlossen. Der Durchmesser der Durchgangsöffnung wird durch die Stauchung beispielhaft minimal verringert. Die Windungen sind trotz der radialen Stauchung im Wesentlichen radial ausgerichtet. Die radiale Ausrichtung bestimmt sich durch die Winkelhalbierende eines Winkels, der von der Windung beziehungsweise dem ersten und zweiten Erstreckungsabschnitt eingeschlossen wird. In der beispielhaften Ausführungsform, in der die Windungen eine radiale Ausrichtung aufweisen, fallen Winkelhalbierende des Winkels zwischen den Erstreckungsabschnitten und der Radius des Kontaktelementes im Wesentlichen zusammen. Das Kontaktelement umfasst beispielhaft zwölf Windungen bei einem Einbaudurchmesser D_{E} von etwa 13 mm, einer radialen Erstreckung Eᵣ von etwa 4,5 mm und einen Drahtdurchmesser D_{D} von etwa 1 mm. Dies entspricht etwa der nominellen Windungszahl.

Wird beispielhaft ein Langformteil in der Durchgangsöffnung des Kontaktelements, das in der Kabelverschraubung eingesetzt ist, angeordnet, ist das Kontaktelement im verbauten Zustand. Die Windungen sind beispielhaft durch das Langformteil derart verformt, dass die Ausrichtung beziehungsweise die Winkelhalbierende des Winkels, der durch die Erstreckungsabschnitte aufgespannt wird, in einem Winkel zum Radius des Kontaktelements ausgerichtet ist. Durch das Langformteil wird der Durchmesser der Durchgangsöffnung auf den hier nicht extra bezeichneten Außendurchmesser des Langformteils aufgeweitet. Weiterhin beispielhaft wird durch das Langformteil, das in der Durchgangsöffnung angeordnet ist, die Windungen derart verformt, dass diese sich zumindest im Bereich der Stützabschnitte kontaktieren.

Bevorzugt wird ein oben beschriebenes Kontaktelement für die elektrische Kontaktierung von Bauteilen mit Schirmungsfunktion und/oder Stromführungsfunktion verwendet.

In einer Ausgestaltung ist vorgesehen, dass das Kontaktelement zum Einbau in ein Bauteil mit einer rotationssymmetrischer, beispielsweise zylindrischer oder konischer, Innenwandung verwendet wird. Die Innenwandung kann alternativ auch torusförmig oder doppelkonisch ausgebildet sein oder eine andere rotationssymmetrische Ausgestaltung aufweisen. Bevorzugt ist vorgesehen, dass das Kontaktelement zur Einsetzung in das Bauteil mit einer Kammer, bevorzugt einer Kabelverschraubung, weiter bevorzugt wie unten beschrieben, verwendet wird.

In einer beispielhaften Ausgestaltung ist vorgesehen, dass das Kontaktelement zur Einsetzung in eine Kammer eines Bauteils einer Kabelverschraubung verwendet wird. Beispielsweise ist vorgesehen, dass ein Kabel durch die Kammer geführt ist, dessen freigelegter Schirm mittels des Kontaktelements kontaktiert ist und den Schirm mit dem Bauteil elektrisch verbindet. Weiterhin wird eine Verwendung eines Kontaktelementes für die Kontaktierung von Bauteilen mit Schirmungsfunktion und/oder Stromführfunktion vorgeschlagen.

Erfindungsgemäß wird eine Kabelverschraubung umfassend ein Bauteil und mindestens ein Kontaktelement vorgeschlagen. Das Kontaktelement umfasst eine Mehrzahl von im Wesentlichen geometrisch gleich geformten Windungen, wobei jede Windung einen Halteabschnitt zur elektrischen Kontaktierung des das Kontaktelement umgegeben Bauteils, mindestens einen Stützabschnitt zur elektrischen Kontaktierung eines Schirms eines Langformteils und einen ersten und einen zweiten sich jeweils geradlinig erstreckenden Erstreckungsabschnitt umfasst. Der erste und der zweite Erstreckungsabschnitt verbinden den Halteabschnitt mit dem mindestens einen Stützabschnitt. Bevorzugt ist das Kontaktelement wie oben beschrieben ausgestaltet.

Bevorzugt umfasst die Kabelverschraubung einen Nippel, beispielsweise einen Doppelnippel.

Weiterhin vorteilhaft ist der Nippel das Bauteil, das das Kontaktelement aufnimmt. Das Bauteil umfasst bevorzugt eine Kammer mit einer Innenwandung, an der sich das Kontaktelement abstützt. Weiter bevorzugt stützt sich der Halteabschnitt gegen die Innenwandung des Bauteils ab. Die Innenwandung des Bauteils ist bevorzugt zylindrisch ausgestaltet. Weiter bevorzugt erstreckt sich eine Hochachse des Bauteils, insbesondere der zylindrischen Innenwandung, parallel, bevorzugt deckungsgleich, zur Mittellängsachse des eingebauten Kontaktelements.

Beim Einführen des Kontaktelementes in das Bauteil wird das Kontaktelement verformt. Das Kontaktelement im montierten Zustand ist derart in das Bauteil eingebracht, dass sich die Halteabschnitte zumindest teilweise, bevorzugt vollständig, an die Innenwandung des Bauteils anlegen. Insbesondere ist ein Innendurchmesser des Bauteils kleiner als ein maximaler Außendurchmesser des nicht eingesetzten Kontaktelementes. Bevorzugt wird das Kontaktelement bei dessen Montage in das Bauteil zumindest teilweise in radialer Richtung gestaucht. Weiter bevorzugt ist ein Halteabschnitt, der im nicht eingesetzten Zustand auf einer Ebene, in der die Mittellängsachse liegt, in einem Winkel von etwa -50° bis etwa +50° zur Mittellängsachse der Durchgangsöffnung des Kontaktelements angeordnet ist, im montierten Zustand im Wesentlichen parallel zur Mittellängsachse ausgerichtet.

In einer Ausgestaltung ist vorgesehen, dass die Kabelverschraubung ein Bauteil mit einer Kammer umfasst, die radial zur Mittellängsachse durch eine Innenwandung und längs der Mittellängsachse von zumindest einem radial zumindest teilweise umlaufenden Absatz begrenzt ist. Der mindestens eine Absatz kann als diskrete Verringerung eines Innendurchmessers des Bauteils ausgebildet sein. Weiterhin kann der mindestens eine Absatz als Wandung ausgebildet sein. Bevorzugt kann der mindestens eine als Wandung ausgestaltete Absatz entweder außenseitig, einseitig eben mit dem Bauteil abschließen oder eine Begrenzung innerhalb des Bauteils bilden. Der zumindest eine zumindest teilweise radial umlaufende Absatz formt bevorzugt eine Einsetzöffnung, durch die das Kontaktelement in die Kammer einsetzbar ist. Bevorzugt wird das Kontaktelement radial zusammengedrückt, um es durch die Einsetzöffnung in die Kammer einzusetzen. Weiter bevorzugt entspannt sich das Kontaktelement in der Kammer derart, dass ein Herausrutschen des Kontaktelementes aus der Kammer durch den zumindest einen Absatz verhindert wird.

In einer Ausgestaltung ist vorgesehen, dass der erste und/oder der zweite Erstreckungsabschnitt zumindest teilweise an dem zumindest einen umlaufenden Absatz anliegt. Bevorzugt ist ein elektrischer Kontakt zwischen dem ersten und/oder zweiten Erstreckungsabschnitt und dem zumindest einen umlaufenden Absatz vorgesehen.

In einer Ausgestaltung ist vorgesehen, dass der Absatz des Bauteils das Kontaktelement axial in seiner Bewegung begrenzt beziehungsweise stützt. In einer Ausgestaltung ist vorgesehen, dass der Absatz eine radiale Erstreckung aufweist. Bevorzugt ist die radiale Erstreckung eine Erstreckung von einer Bauteilinnenwandung zu einer radial innenliegenden Kante des Absatzes. Die radiale Erstreckung weist bevorzugt zu dem Drahtdurchmesser des Kontaktelementes ein Verhältnis von etwa 2,5 bis etwa 7, bevorzugt etwa 3 bis etwa 5, weiter bevorzugt etwa 3,5 bis etwa 4,5 auf. In einer Ausgestaltung ist der Drahtdurchmesser etwa 0,5 mm bis etwa 5 mm, bevorzugt etwa 1 mm bis etwa 2 mm.

In einer Ausgestaltung ist vorgesehen, dass zumindest ein Halteabschnitt, bevorzugt eine Vielzahl von Halteabschnitten, weiter bevorzugt alle Halteabschnitte, des mindestens einen Kontaktelementes an einer Innenwandung eines Bauteils der Kabelverschraubung anliegt beziehungsweise anliegen. In einer Ausgestaltung wird das Kontaktelement derart durch die Kammer, bevorzugt durch die Innenwandung der Kammer, verformt, dass eine Mantelfläche der Einhüllenden des Kontaktelementes an die Formgebung der Innenwandung angepasst ist. Bevorzugt legen sich die Halteabschnitte derart an die Innenwandung, dass die Einhüllende im Bereich der Halteabschnitte die Formgebung der Innenwandung annimmt. Beispielsweise kann die Innenwandung zylindrisch oder konisch geformt sein. Bevorzugt ist ein Innendurchmesser der Kammer kleiner als ein Außendurchmesser des Kontaktelementes im nicht eingesetzten Zustand.

In einer Ausgestaltung ist vorgesehen, dass die Windungen im eingesetzten Zustand eine radiale Ausrichtung aufweisen. In einer weiteren Ausgestaltung ist vorgesehen, dass die Windungen in einem in ein Bauteil, insbesondere mit zylindrischer Innenwandung, eingesetzten Zustand in einem Winkel zum Radius auf die Mittellängsachse ausgerichtet sind.

In einer Ausgestaltung ist vorgesehen, dass die Ausrichtung der Windungen in einem eingesetzten Zustand etwa ±6° bis etwa ±50°, bevorzugt etwa ±6° bis etwa ±30°, weiter bevorzugt etwa ±8° bis ±25°, zum Radius auf die Mittellängsachse abweichen. In einer Ausgestaltung ist vorgesehen, dass die Ausrichtung der Windungen in einem verbauten Zustand mit durchgeführtem Langformteil etwa ±10° bis etwa ±80°, bevorzugt etwa ±10° bis etwa ±75°, weiter bevorzugt etwa ±20° bis ±70°, zum Radius auf die Mittellängsachse abweichen.

Durch die Durchführung des Langformteils durch die Kammer mit dem eingesetzten Kontaktelement vergrößert sich bevorzugt die Abwinklung der Windungen, bevorzugt aller Windungen, zum Radius im Vergleich zum eingesetzten Zustand in einem solchen Bauteil.

In einer Ausgestaltung ist vorgesehen, dass das mindestens eine Kontaktelement in einer Kammer eines Bauteils, welches mindestens ein Außengewinde aufweist, aufgenommen ist, wobei durch das Bauteil mindestens ein Langformteil führbar ist. In einer Ausgestaltung ist vorgesehen, dass die Kammer des Bauteils zwei oder eine Vielzahl von Kontaktelementen aufnimmt. In einer weiteren Ausgestaltung ist vorgesehen, dass das Bauteil eine Vielzahl von Kammern aufweist, in denen jeweils zumindest ein Kontaktelement einsetzbar ist. In einer weiteren Ausgestaltung ist vorgesehen, dass die Kabelverschraubung eine Vielzahl von Bauteilen zur Aufnahme von jeweils zumindest einem Kontaktelement aufweist.

In einer Ausgestaltung der Kabelverschraubung mit mindestens einem Langformteil ist vorgesehen, dass das zumindest eine Langformteil zumindest teilweise in einer Kammer mit dem mindestens einen Kontaktelement angeordnet ist, wobei die Kabelverschraubung und das mindestens eine Langformteil einen verbauten Zustand ausbilden, wobei im verbauten Zustand der zumindest eine Stützabschnitt jeder Windung des mindestens einen Kontaktelementes zumindest teilweise an einem Schirm des Langformteils anliegt und die Windungen von einer radialen Ausrichtung abweichen. Das mindestens eine Langformteil ist durch die Durchgangsöffnung des zumindest einen Kontaktelementes geführt. Die Windungen kontaktieren das Langformteil bevorzugt elektrisch, insbesondere einen abisolierten Abschnitt des Langformteils.

Bevorzugt werden die Windungen durch die Montage des Langformteils in das Kontaktelement winklig zum Radius auf die Mittellängsachse ausgerichtet. Bevorzugt werden durch das Langformteil die Windungen derart kontaktiert und gedrückt, dass diese sich in radialer Ausrichtung zur Mittellängsachse verschieben. Bevorzugt werden durch das Langformteil die Windungen derart kontaktiert und gedrückt, dass diese sich in radialer Richtung, bezogen auf die Mittellängsachse, von der Mittellängsachse weg verschieben, wenn der Außendurchmesser des Kontaktelementes im eingesetzten Zustand ohne Langformteil kleiner ist als der Innendurchmesser des Bauteils. Bevorzugt wird bei der Durchführung des Langformteils durch die Durchgangsöffnung des im Bauteil eingesetzten Kontaktelementes eine Ausrichtung der Windungen geändert. Sind die Windungen beispielsweise vor dem Durchführen des Langformteils radial ausgerichtet, werden diese durch Durchführen des Langformteils derart verschoben beziehungsweise verformt, dass diese sich in einem Winkel zum Radius auf die Mittellängsachse ausrichten. Sind die Ausrichtungen der Windungen beispielsweise vor dem Einführen des Langformteils in einem Winkel vom Radius auf die Mittellängsachse angeordnet, werden diese durch Einführen des Langformteils derart durch Verschieben oder Verformen der Windungen geändert, dass sich der Winkel zum Radius auf die Mittellängsachse vergrößert.

Das Langformteil weist in einer Ausführungsform einen Langformteildurchmesser auf, der größer oder gleich einem Durchmesser der Durchgangsöffnung des im Bauteil eingesetzten Kontaktelementes ohne Langformteil ist. Bevorzugt kontaktiert das Langformteil den Stützabschnitt der Windungen und/oder die Radialabschnitte zwischen den ersten und zweiten Stützabschnitten.

Eine beispielhafte Kabelverschraubung umfasst eine Druckmutter, ein Dichtelement sowie ein Bauteil und einen O-Ring. In dem Bauteil ist beispielhaft ein Kontaktelement angeordnet. Die Druckmutter ist auf das Bauteil schraubbar, wobei das Dichtelement gestaucht wird und sich dichtend um ein Langformteil anschmiegen kann. Der O-Ring kann die Kabelverschraubung gegen eine Anschlussgeometrie abdichten, in der die Kabelverschraubung eingebracht ist.

Das Kontaktelement ist beispielhaft von einem radial umlaufenden Absatz in einer Kammer des Bauteils gehalten. Die Kammer ist radial zur Mittellängsachse durch eine Innenwandung und längs der Mittellängsachse von einem radial umlaufenden Absatz begrenzt. Beispielhaft kontaktiert der zweite Erstreckungsabschnitt den Absatz. Durch die elektrische Kontaktierung des Absatzes mit dem zweiten Erstreckungsabschnitt eines Kontaktelements kann eine vorteilhafte Ableitung von Strömen erfolgen. Der Halteabschnitt kontaktiert beispielhaft die Innenwandung der Kammer. Durch die elektrische Kontaktierung des Halteabschnittes mit der Innenwandung der Kammer kann ebenfalls eine vorteilhafte Ableitung von Strömen erfolgen. Durch die beispielhafte Ausgestaltung des Kontaktelementes wird die Innenoberfläche der Kammer optimal zur Stromableitung ausgenutzt.

In einer weiteren beispielhaften Ausgestaltung ist ein Langformteil, beispielweise ein Kabel in die Kabelverschraubung eingesetzt. Das beispielhafte Langformteil weist einen abisolierten Teil auf, bei dem ein Schirm freigelegt ist. Der Schirm wird in der Kammer von dem Kontaktelement elektrisch kontaktiert. Durch die Formgebung des federartigen Kontaktelementes, insbesondere durch die Vorsehung von ersten und zweiten Erstreckungsabschnitten ist das Kontaktelement bei der Montage des Langformteils derart verwindungssteif ausgestaltet, dass ein Verkippen des Kontaktelementes in der Kammer, insbesondere bei Einführung des biegeschlaffen Langformteils, verhindert ist.

Weiterhin wird eine Verwendung einer oben beschriebenen Kabelverschraubung für eine elektrische Kontaktierung zumindest eines Schirmes zumindest eines Langformteils vorgeschlagen.

Weitere vorteilhafte Ausgestaltungen gehen aus den nachfolgenden Zeichnungen hervor. Die dort dargestellten Weiterbildungen sind jedoch nicht beschränkend auszulegen, vielmehr können die dort beschriebenen Merkmale untereinander und mit den oben beschriebenen Merkmalen zu weiteren Ausgestaltungen kombiniert werden. Des Weiteren sei darauf verwiesen, dass die in der Figurenbeschreibung angegebenen Bezugszeichen den Schutzbereich der vorliegenden Erfindung nicht beschränken, sondern lediglich auf die in den Figuren gezeigten Ausführungsbeispiele verweisen. Gleiche Teile oder Teile mit gleicher Funktion weisen im Folgenden die gleichen Bezugszeichen auf. Es zeigen:
- Fig. 1: eine Schnittansicht I-I gemäß Fig. 2 durch ein Kontaktelement;
- Fig. 2: eine Aufsicht auf das Kontaktelement aus Fig. 1 im nicht eingesetzten Zustand;
- Fig. 3: eine isometrische Ansicht des Kontaktelements aus Fig. 1;
- Fig. 4: eine Aufsicht auf das Kontaktelement aus Fig. 2 im eingesetzten Zustand;
- Fig. 5: eine Aufsicht auf das Kontaktelement aus Fig. 2 im verbauten Zustand;
- Fig. 6: eine Explosionsansicht einer Kabelverschraubung mit dem Kontaktelement aus Fig. 2;
- Fig. 7: eine Schnittansicht der Kabelverschraubung aus Fig. 6;
- Fig. 8: eine Schnittansicht der Kabelverschraubung aus Fig. 6 mit einem Langformteil;
- Fig. 9: eine Schnittansicht der Kabelverschraubung aus Fig. 7;
- Fig. 10: eine Schnittansicht X - X gemäß Fig. 11 eines alternativen Kontaktelements;
- Fig. 11: eine Aufsicht auf das Kontaktelement aus Fig. 10 im nicht eingesetzten Zustand;
- Fig. 12: eine Aufsicht auf das Kontaktelement aus Fig. 11 im eingesetzten Zustand;
- Fig. 13: eine Aufsicht auf das Kontaktelement aus Fig. 11 im verbauten Zustand;
- Fig. 14: eine Explosionsansicht einer alternativen Kabelverschraubung mit dem Kontaktelement aus Fig. 11;
- Fig. 15: eine Schnittansicht der Kabelverschraubung aus Fig. 14;
- Fig. 16: eine Schnittansicht der Kabelverschraubung aus Fig. 14 mit einem Langformteil; und
- Fig. 17: eine Schnittansicht XVII - XVII der Kabelverschraubung aus Fig. 15.

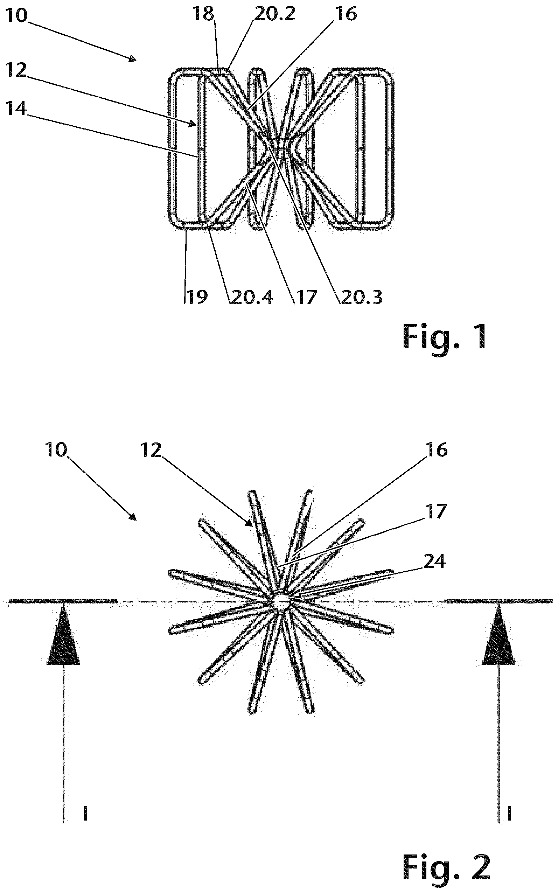

Fig. 1 zeigt eine Schnittansicht I-I gemäß Fig. 2 durch ein Kontaktelement 10. Das Kontaktelement 10 umfasst zwölf von im Wesentlichen gleich ausgestalteten Windungen 12, von der der Übersichtlichkeit halber nur eine Windung 12 bezeichnet ist. Die einzelnen Windungen 12 umfassen einen Halteabschnitt 14, einen ersten Erstreckungsabschnitt 18, einen ersten Stützabschnitt 16, einen zweiten Stützabschnitt 17 und einen zweiten Erstreckungsabschnitt 19. Zwischen dem Halteabschnitt 14 und dem ersten Erstreckungsabschnitt 18 ist ein erster Radialabschnitt angeordnet, der hinter einer Windung nicht zu sehen ist. Ein zweiter Radialabschnitt 20.2 ist zwischen dem ersten Erstreckungsabschnitt 18 und dem ersten Stützabschnitt 16 angeordnet. Ein dritter Radialabschnitt 20.3 ist zwischen dem ersten Stützabschnitt 16 und dem zweiten Stützabschnitt 17 angeordnet. Ein vierter Radialabschnitt 20.4 ist zwischen dem zweiten Stützabschnitt 17 und dem zweiten Erstreckungsabschnitt 19 angeordnet. Die Radialabschnitte 20.1 bis 20.4 bilden jeweils den Übergang zwischen den angrenzenden linearen Abschnitten 14, 18, 16, 17, 19, die aneinander grenzen und in einem Winkel zueinander stehen.

In der Ansichtsebene ist zu erkennen, dass eine Windung 12 als hausförmig beschrieben werden kann, wobei der erste und der zweite Stützabschnitt 16, 17 als Dach beschrieben werden können, an denen Hauswände aus den ersten und zweiten Erstreckungsabschnitten 18, 19 grenzen und wobei der Halteabschnitt 14 einen Boden bildet.

Fig. 2 zeigt eine Aufsicht auf das Kontaktelement 10 aus Fig. 1 in einem nicht eingesetzten Zustand. Die Windungen 12 sind radial ausgerichtet, wobei durch die Stützabschnitte 16 und 17 eine Durchgangsöffnung 24 gebildet wird, durch die ein nicht gezeigtes Langformteil führbar ist.

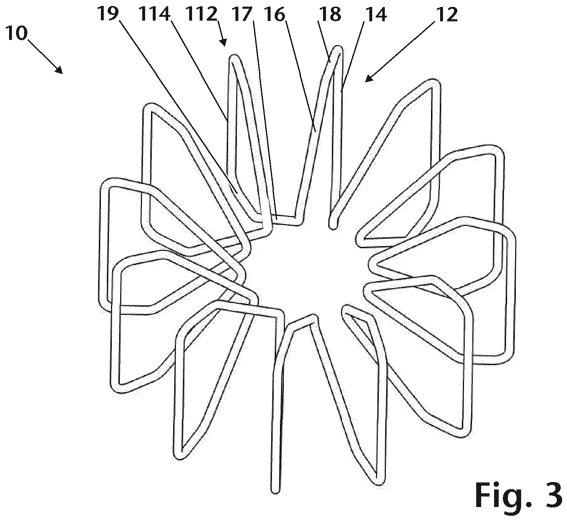

Fig. 3 zeigt eine isometrische Ansicht des Kontaktelements 10 aus Fig. 1. Es weist zwölf gleich ausgestalteten Windungen 12, 112 auf, die der Übersicht halber nicht alle bezeichnet sind. Der isometrischen Ansicht kann entnommen werden, dass an den Halteabschnitt 14 der erste Erstreckungsabschnitt 18 grenzt. An den ersten Erstreckungsabschnitt 18 grenzt der erste Stützabschnitt 16, der wiederum an den zweiten Stützabschnitt 17 grenzt. Der zweite Stützabschnitt 17 grenzt an den zweiten Erstreckungsabschnitt 19, der wiederum an den Halteabschnitt 114 der nächsten Windung 112 grenzt. Halteabschnitt 14, erster Erstreckungsabschnitt 18, erster Stützabschnitt 16, zweiter Stützabschnitt 17 und zweiter Erstreckungsabschnitt 19 sind somit nachfolgend aneinander angeordnet.

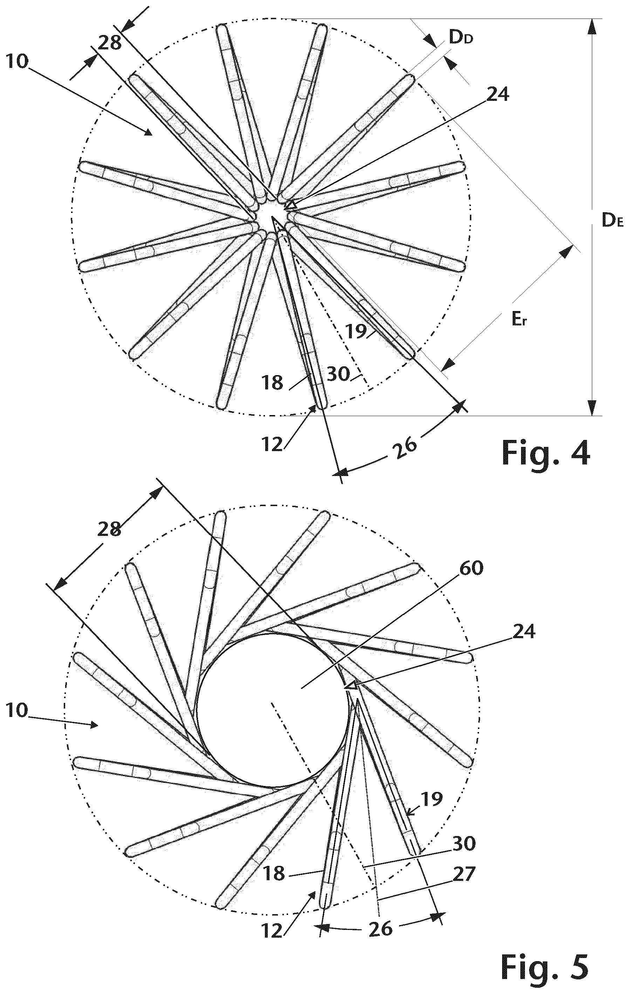

Fig. 4 zeigt eine Aufsicht auf das Kontaktelement 10 aus Fig. 2 im eingesetzten Zustand. Die Kammer, in die das Kontaktelement 10 eingesetzt ist in dieser Ansicht der Übersichtlichkeit halber nicht gezeigt. Durch Einsetzen in die Kammer ist das Kontaktelement 10 radial gestaucht. Der Durchmesser 28 der Durchgangsöffnung 24 wird durch die Stauchung minimal verringert. Die Windungen 12 sind trotz der radialen Stauchung im Wesentlichen radial ausgerichtet. Die radiale Ausrichtung bestimmt sich durch eine Winkelhalbierende eines Winkels 26, der von der Windung 12 beziehungsweise dem ersten und zweiten Erstreckungsabschnitt 18 und 19 aufgespannt wird. In Fig. 4, in der die Windungen 12 eine radiale Ausrichtung aufweisen, fallen Winkelhalbierende des Winkels 26 und der Radius 30 des Kontaktelementes 10 im Wesentlichen zusammen. Die zwölf Windungen 12 des Kontaktelementes entsprechen etwa der nominellen Windungszahl für einen Einbaudurchmesser D_{E} von etwa 13 mm, einer radialen Erstreckung Eᵣ von etwa 4,5 mm und einen Drahtdurchmesser D_{D} von etwa 1 mm.

Fig. 5 zeigt eine Aufsicht auf das Kontaktelement 10 aus Fig. 2 im verbauten Zustand. Ein Langformteil 60 ist in der Durchgangsöffnung 24 des Kontaktelements 10 angeordnet. Die Windungen 12 werden durch das Langformteil 60 derart verformt, dass die Ausrichtung beziehungsweise die Winkelhalbierende 27 des Winkels 26, der durch die Erstreckungsabschnitte 18 und 19 aufgespannt wird, in einem Winkel zum Radius 30 des Kontaktelements 10 steht. Durch das Langformteil 60 wird der Durchmesser 28 der Durchgangsöffnung 24 auf den hier nicht extra bezeichneten Außendurchmesser des Langformteils 60 aufgeweitet.

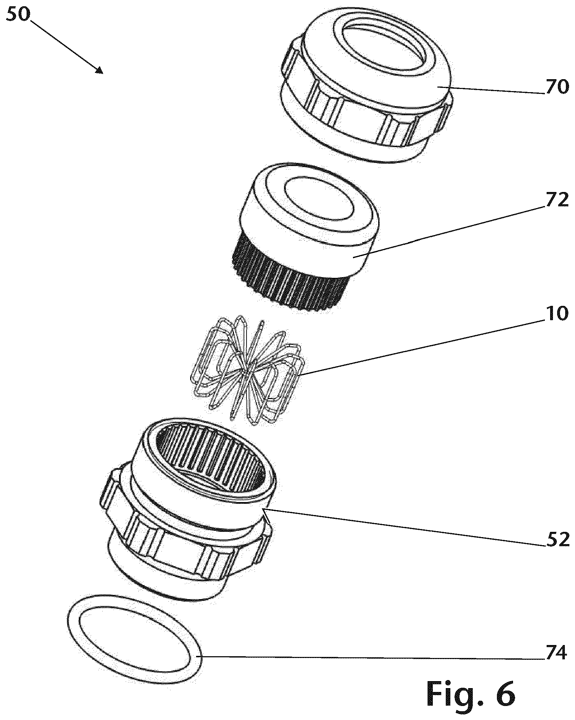

Fig. 6 zeigt eine Explosionsansicht einer Kabelverschraubung 50 mit dem Kontaktelement 10 aus Fig. 2. Die Kabelverschraubung 50 umfasst eine Druckmutter 70, ein Dichtelement 72 sowie ein Bauteil 52 und einen O-Ring 74. In das Bauteil 52 wird ein Kontaktelement 10 angeordnet. Die Druckmutter 70 kann auf das Bauteil 52 geschraubt werden, wobei das Dichtelement 72 gestaucht wird und sich dichtend um ein nicht dargestelltes Langformteil anschmiegen kann. Der O-Ring 74 kann die Kabelverschraubung 50 gegen eine nicht dargestellte Anschlussgeometrie abdichten.

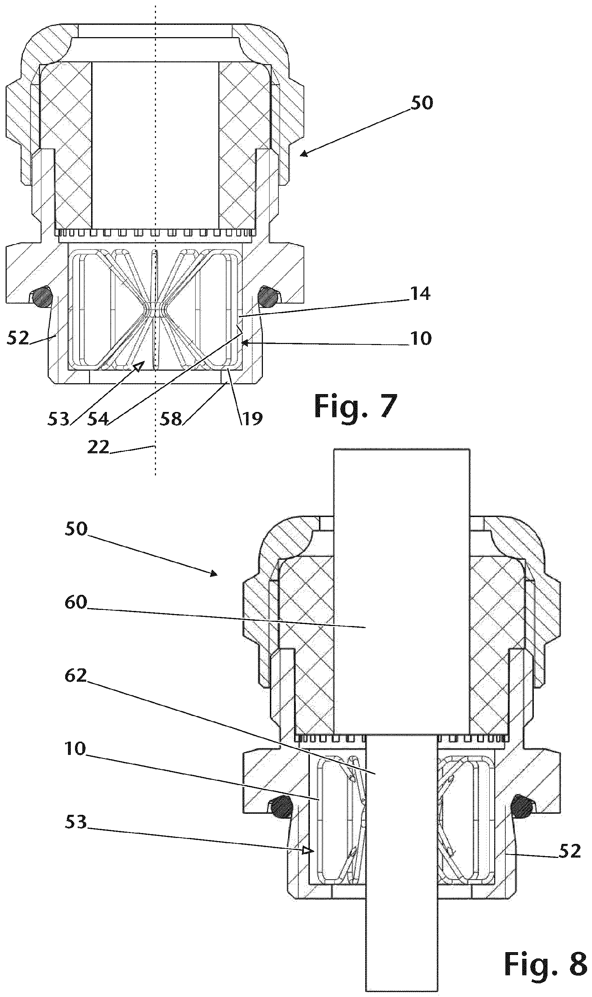

Fig. 7 zeigt eine Schnittansicht der Kabelverschraubung 50 aus Fig. 6. Das Kontaktelement 10 wird von dem radial umlaufenden Absatz 58 in einer Kammer 53 des Bauteils 52 gehalten. Die Kammer 53 ist radial zu einer Mittellängsachse 22 von einer Innenwandung 54 und längs der Mittellängsachse 22 von einem radial umlaufenden Absatz 58 begrenzt. Der zweite Erstreckungsabschnitt 19 kontaktiert den Absatz 58. Durch die elektrische Kontaktierung von Absatz 58 mit dem zweiten Erstreckungsabschnitt 19 kann eine vorteilhafte Ableitung von Strömen erfolgen. Der Halteabschnitt 14 kontaktiert die Innenwandung 54 der Kammer 53. Durch die elektrische Kontaktierung des Halteabschnittes 14 mit der Innenwandung 54 der Kammer 53 kann ebenfalls eine vorteilhafte Ableitung von Strömen erfolgen. Durch die Ausgestaltung des Kontaktelementes 10 wird die Innenoberfläche der Kammer 53 optimal zur Stromableitung genutzt.

Fig. 8 zeigt eine Schnittansicht der Kabelverschraubung 50 aus Fig. 6 mit einem Langformteil 60. Das Langformteil 60 weist einen abisolierten Teil auf, bei dem ein Schirm 62 freigelegt ist. Der Schirm 62 wird in der Kammer 53 des Bauteils 52 durch das Kontaktelement 10 elektrisch kontaktiert. Durch die Formgebung des federartigen Kontaktelementes 10, insbesondere durch die Vorsehung von ersten und zweiten Erstreckungsabschnitten 18 und 19 ist das Kontaktelement 10 bei der Montage des Langformteils 60 derart verwindungssteif, dass ein Verkippen des Kontaktelementes 10 in der Kammer 53 verhindert wird.

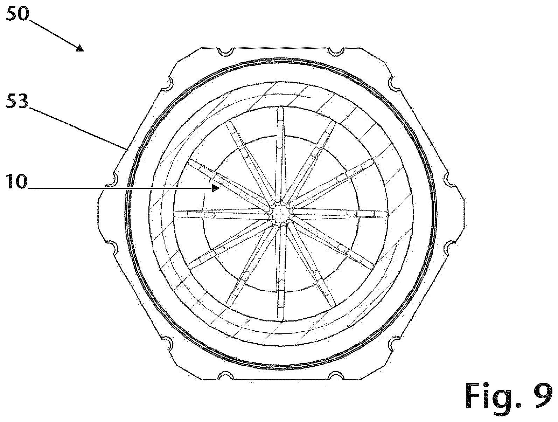

Fig. 9 zeigt eine Schnittansicht der Kabelverschraubung 50 aus Fig. 7 im Bereich zwischen radial umlaufenden Absatz 58 und Kontaktelement 10. Zu erkennen ist das Kontaktelement 10, das in der Kammer 53 angeordnet ist.

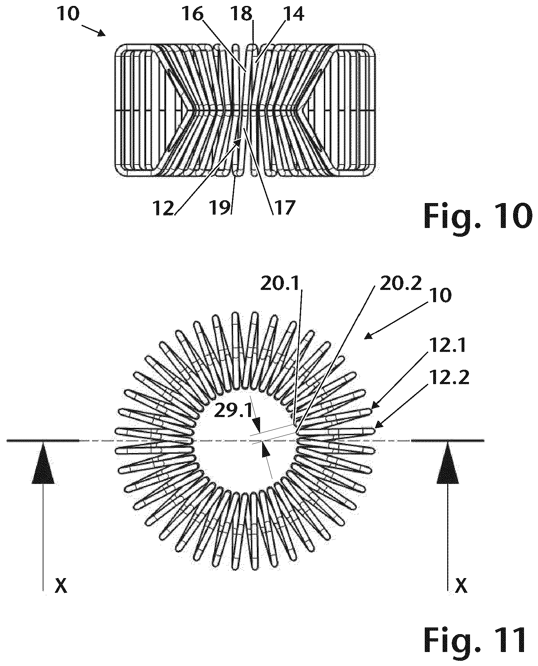

Fig. 10 zeigt eine Schnittansicht X - X gemäß Fig. 11 eines alternativen Kontaktelements 10 mit 40 Windungen 12, von denen nur eine der Übersichtlichkeit halber bezeichnet ist. Die Windung 12 weist einen Halteabschnitt 14, einen ersten Erstreckungsabschnitt 18, einen ersten Stützabschnitt 16, einen zweiten Stützabschnitt 17 und einen zweiten Erstreckungsabschnitt 19 auf, die in der angegebenen Reihenfolge aneinander grenzen.

Fig. 11 zeigt eine Aufsicht auf das Kontaktelement aus Fig. 10 im nicht eingesetzten Zustand. Zwischen den Windungen 12.1 und 12.2 ist im Bereich der Stützabschnitte, die der Übersicht halber nicht bezeichnet werden, beziehungsweise der Radialabschnitte 20.1 und 20.2 zwischen den ersten und zweiten Stützabschnitten ein Abstand 29.1 vorgesehen.

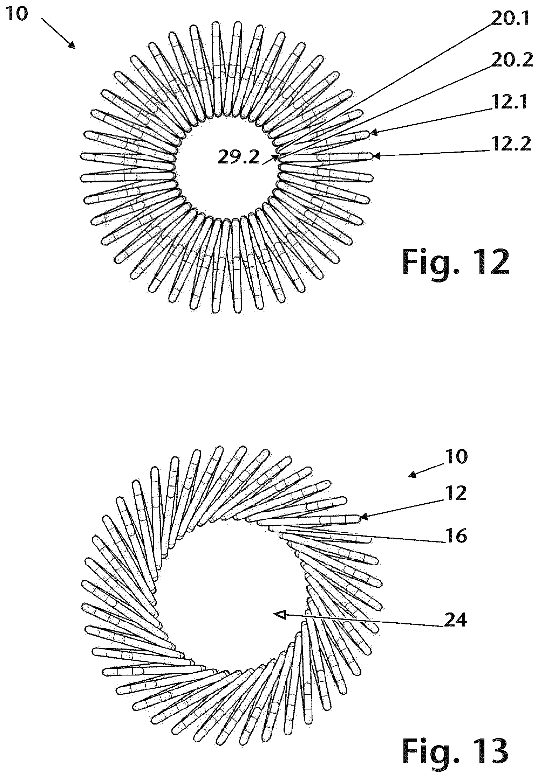

Fig. 12 zeigt eine Aufsicht auf das Kontaktelement 10 aus Fig. 11 im eingesetzten Zustand. Der Abstand 29.2 zwischen den Stützabschnitten, die der Übersicht halber nicht bezeichnet werden, beziehungsweise der Radialabschnitte 20.1 und 20.2 zwischen den ersten und zweiten Stützabschnitten der Windungen 12.1 und 12.2 ist durch die radiale Stauchung in der nicht gezeigten Kammer geringer als der Abstand 29.1 aus Fig. 11 beziehungsweise vollständig geschlossen.

Fig. 13 zeigt eine Aufsicht auf das Kontaktelement 10 aus Fig. 11 im verbauten Zustand. Durch das nicht gezeigte Langformteil, das in der Durchgangsöffnung 24 angeordnet ist, werden die Windungen 12 derart verformt, dass diese sich im Bereich der Stützabschnitte 16 berühren.

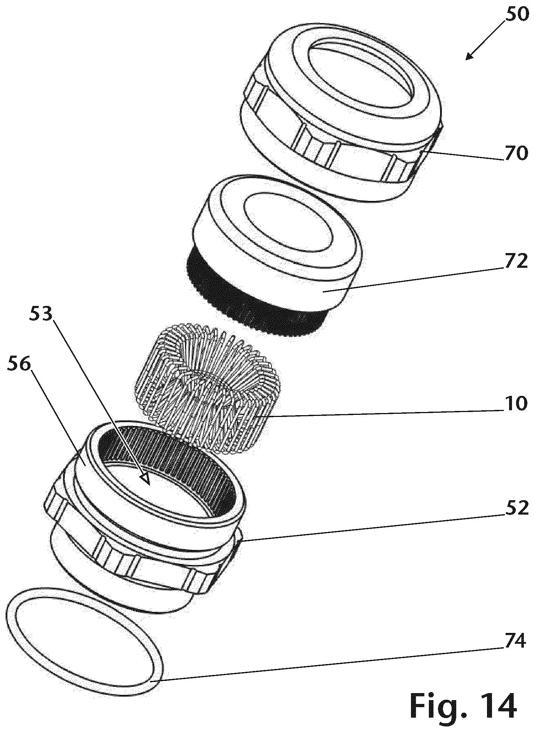

Fig. 14 zeigt eine Explosionsansicht einer alternativen Kabelverschraubung 50 mit dem Kontaktelement 10 aus Fig. 11. Die Kabelverschraubung 50 umfasst eine Druckmutter 70, ein Dichtelement 72 sowie ein Bauteil 52 und einen O-Ring 74. In die Kammer 53 des Bauteils 52 wird das Kontaktelement 10 angeordnet. Die Druckmutter 70 kann auf ein Außengewinde 56 des Bauteils 52 geschraubt werden, wobei das Dichtelement 72 gestaucht wird und sich dichtend um ein nicht dargestelltes Langformteil anschmiegen kann. Der O-Ring 74 kann die Kabelverschraubung 50 gegen eine nicht dargestellte Anschlussgeometrie abdichten.

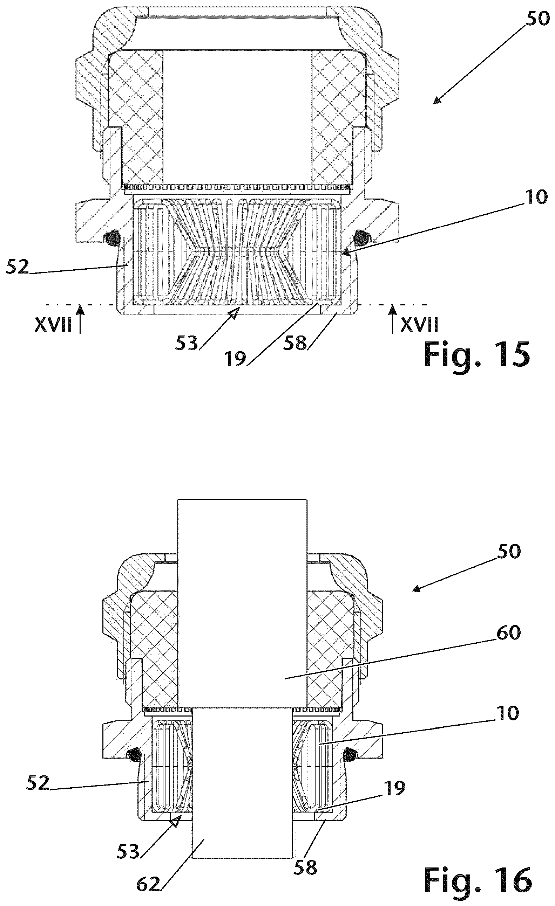

Fig. 15 zeigt eine Schnittansicht der Kabelverschraubung 50 aus Fig. 14, in der in die Kammer 53 des Bauteils 52 das Kontaktelement 10 angeordnet ist, welches von dem umlaufenden Absatz 58 gehalten ist. Der Erstreckungsabschnitt 19 liegt auf dem Absatz 58 auf.

Fig. 16 zeigt eine Schnittansicht der Kabelverschraubung 50 aus Fig. 14 in der in die Kammer 53 des Bauteils 52 das Kontaktelement 10 angeordnet ist, welches von dem umlaufenden Absatz 58 gehalten ist. Der Erstreckungsabschnitt 19 liegt auf dem Absatz 58 auf. In der Kabelverschraubung 10 ist ein Langformteil 60 angeordnet, dessen Schirm 62 von dem Kontaktelement 10 elektrisch kontaktiert ist.

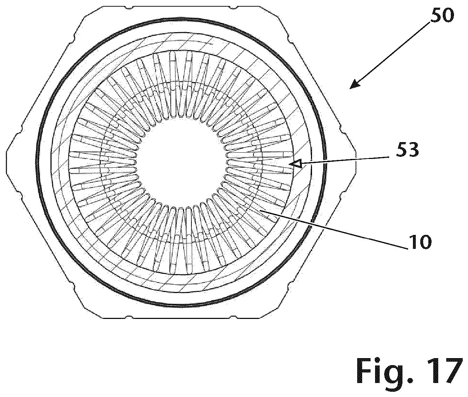

Fig. 17 zeigt eine Schnittansicht XVII - XVII der Kabelverschraubung 50 aus Fig. 15. Das Kontaktelement 10 ist in der Kammer 53 angeordnet.

Das Kontaktelement 10 lässt sich komfortabel in eine Kabelverschraubung 50 einsetzen, wobei insbesondere bei der Montage des insbesondere biegeschlaffen Langformteils 60 in die Kabelverschraubung 50 ein Verkippen und ungewolltes Verwinden des Kontaktelementes 10 verhindert wird. Weiterhin vorteilhaft ist durch die vorgeschlagene Formgebung des Kontaktelementes 10 eine möglichst große elektrische Kontaktfläche mit dem Bauteil 52 gegeben.

## Patentansprüche

1. Kabelverschraubung (50) umfassend ein Bauteil (52) und mindestens ein Kontaktelement (10), wobei das mindestens eine Kontaktelement (10) eine Mehrzahl von im Wesentlichen geometrisch gleich geformten Windungen (12) umfasst, wobei jede Windung (12) einen Halteabschnitt (14) zur elektrischen Kontaktierung des das Kontaktelement (10) umgebenden Bauteils (52), mindestens einen ersten und einen zweiten Stützabschnitt (16, 17) zur elektrischen Kontaktierung eines Schirms (62) eines Langformteils (60) und einen ersten und einen zweiten Erstreckungsabschnitt (18, 19) umfasst, wobei der Halteabschnitt (14), der erste Erstreckungsabschnitt (18) und die zwei Stützabschnitte (16, 17) einander nachfolgend angeordnet sind und der erste Stützabschnitt (16) und der zweite Stützabschnitt (17) aneinander grenzen.

2. Kabelverschraubung gemäß Anspruch 1, **dadurch gekennzeichnet, dass** der erste und/oder der zweite Erstreckungsabschnitt (18, 19) sich gradlinig erstrecken.

3. Kabelverschraubung (50) gemäß einem oder mehreren der vorhergehenden Ansprüche, **dadurch gekennzeichnet, dass** der Halteabschnitt (14), der erste Erstreckungsabschnitt (18), der zweite Erstreckungsabschnitt (19) und/oder der mindestens eine erste und eine zweite Stützabschnitt (16, 17) im Wesentlichen geradlinig ausgestaltet sind.

4. Kabelverschraubung (50) gemäß einem oder mehreren der vorhergehenden Ansprüche, **dadurch gekennzeichnet, dass** zwischen dem Halteabschnitt (14) und dem ersten und dem zweiten Erstreckungsabschnitt (19) und/oder zwischen dem mindestens einen ersten und einen zweiten Stützabschnitt (16, 17) und dem ersten und zweiten Erstreckungsabschnitt (18, 19) ein Radialabschnitt (20) ausgebildet ist.

5. Kabelverschraubung (50) gemäß einem oder mehreren der vorhergehenden Ansprüche, **dadurch gekennzeichnet, dass** der erste Stützabschnitt (16) und der zweite Stützabschnitt (17) etwa gleich lang sind.

6. Kabelverschraubung (50) gemäß einem oder mehreren der vorhergehenden Ansprüche, **dadurch gekennzeichnet, dass** das Kontaktelement (10) ringförmig oder torusförmig ausgestaltet ist.

7. Kabelverschraubung (50) gemäß einem oder mehreren der vorhergehenden Ansprüche, **dadurch gekennzeichnet, dass** das Kontaktelement ein Bauteil (52) mit einer Kammer (53) umfasst, die radial zu einer Mittellängsachse (22) von einer Innenwandung (54) und längs der Mittellängsachse (22) von zumindest einem zumindest teilweise umlaufenden Absatz (58) begrenzt ist.

8. Kabelverschraubung (10) gemäß Anspruch 7, **dadurch gekennzeichnet, dass** der erste und/oder der zweite Erstreckungsabschnitt (18, 19) zumindest teilweise an dem zumindest einen zumindest teilweise umlaufenden Absatz (58) und/oder der Stirnwandung anliegt.

9. Kabelverschraubung gemäß einem oder mehreren der vorhergehenden Ansprüche, **dadurch gekennzeichnet, dass** zumindest ein Halteabschnitt (14) des mindestens einen Kontaktelementes (10) an einer Innenwandung (54) eines Bauteils (52) der Kabelverschraubung (50) anliegt.

10. Kabelverschraubung (50) gemäß einem oder mehreren der vorhergehenden Ansprüche, **dadurch gekennzeichnet, dass** das mindestens eine Kontaktelement (10) in einer Kammer (53) eines Bauteils (52), welches mindestens ein Außengewinde (56) aufweist, aufgenommen ist, wobei durch das Bauteil (52) mindestens ein Langformteil (60) führbar ist.

11. Kabelverschraubung (50) gemäß einem oder mehreren der vorhergehenden Ansprüche mit mindestens einem Langformteil (60), das zumindest teilweise in einer Kammer (53) mit dem mindestens einen Kontaktelement (10) angeordnet ist, wobei die Kabelverschraubung (50) und das mindestens eine Langformteil (60) einen verbauten Zustand ausbilden, wobei im verbauten Zustand der mindestens eine erste und eine zweite Stützabschnitt (16, 17) jeder Windung des mindestens einen Kontaktelementes (10) zumindest teilweise an einem Schirm (62) des Langformteils (60) anliegt und die Windungen (12) von einer radialen Ausrichtung abweichen.

12. Verwendung einer Kabelverschraubung (50) gemäß einem oder mehreren der vorhergehenden Ansprüche für eine elektrische Kontaktierung zumindest eines Schirmes zumindest eines Langformteils.

## Claims

1. Cable gland (50) comprising a component (52) and at least one contact element (10), the at least one contact element (10) comprising a plurality of substantially geometrically identically shaped windings (12), each winding (12) comprising a retaining section (14) for electrically contacting the component (52) surrounding the contact element (10), at least one first and one second supporting section (16, 17) for electrically contacting a shield (62) of a long-molded part (60) and a first and a second extending section (18, 19), the retaining section (14), the first extending section (18) and the at least two supporting sections (16, 17) being arranged one after the other and the first supporting section (16) and the second supporting section (17) adjoining each other.

2. Cable gland according to claim 1, **characterized in that** the first and/or the second extending section (18, 19) extend in a straight line.

3. Cable gland (50) according to one or more of the preceding claims, **characterized in that** the retaining section (14), the first extending section (18), the second extending section (19) and/or the at least one first and one second supporting section (16, 17) are substantially arranged rectilinear.

4. Cable gland (50) according to one or more of the preceding claims, **characterized in that** a radial section (20) is formed between the retaining section (14) and the first and second extending sections (19) and/or between the at least one first and one second supporting section (16, 17) and the first and second extending sections (18, 19).

5. Cable gland (50) according to one or more of the preceding claims, **characterized in that** the first supporting section (16) and the second supporting section (17) have approximately the same length.

6. Cable gland (50) according to one or more of the preceding claims, **characterized in that** the contact element (10) has an annular or toroidal shape.

7. Cable gland (50) according to one or more of the preceding claims, **characterized in that** the contact element comprises a component (52) with a chamber (53) which is confined radially to a central longitudinal axis (22) by an inner wall (54) and along the central longitudinal axis (22) by at least one at least partially circumferential shoulder (58).

8. Cable gland (10) according to claim 7, **characterized in that** the first and/or the second extending section (18, 19) at least partially abuts against the at least one at least partially circumferential shoulder (58) and/or the end wall.

9. Cable gland according to one or more of the preceding claims, **characterized in that** at least one retaining section (14) of the at least one contact element (10) abuts against an inner wall (54) of a component (52) of the cable gland (50).

10. Cable gland (50) according to one or more of the preceding claims, **characterized in that** the at least one contact element (10) is accommodated in a chamber (53) of a component (52) which has at least one external thread (56), whereby the at least one long-molded part (60) is guidable through the component (52).

11. Cable gland (50) according to one or more of the preceding claims, having at least one long-molded part (60) which is arranged at least partially in a chamber (53) with the at least one contact element (10), wherein the cable gland (50) and the at least one long-molded part (60) form an installed state, wherein in the installed state the at least one first and one second supporting section (16, 17) of each winding of the at least one contact element (10) abuts at least partially against a shield (62) of the long-molded part (60) and the windings (12) deviate from a radial alignment.

12. Use of a cable gland (50) according to one or more of the preceding claims for electrically contacting at least one shield of at least one long-molded part.

## Revendications

1. Presse-étoupe (50) comprenant un composant (52) et au moins un élément de contact (10), le au moins un élément de contact (10) comprenant une pluralité de spires (12) de forme géométrique sensiblement identique, chaque spire (12) comprenant une section de retenue (14) pour la mise en contact électrique du composant (52) entourant l'élément de contact (10), au moins une première et une deuxième section de support (16, 17) pour la mise en contact électrique d'un blindage (62) d'un élément de forme allongée (60) et une première et une deuxième sections d'extension (18, 19), dans lequel la section de retenue (14), la première section d'extension (18) et les deux sections de support (16, 17) sont disposées en aval l'une de l'autre et la première section de support (16) et la deuxième section de support (17) sont adjacents.

2. Presse-étoupe selon la revendication 1, **caractérisé en ce que** la première et/ou la deuxième section d'extension (18, 19) s'étendent de manière rectiligne.

3. Presse-étoupe (50) selon une ou plusieurs des revendications précédentes, **caractérisé en ce que** la section de retenue (14), la première section d'extension (18), la deuxième section d'extension (19) et/ou au moins une première et une deuxième section de support (16, 17) sont configurées de manière essentiellement rectiligne.

4. Presse-étoupe (50) selon une ou plusieurs des revendications précédentes, **caractérisé en ce qu'**une section radiale (20) est formée entre la section de retenue (14) et les première et deuxième sections d'extension (19) et/ou entre les au moins une première et une deuxième sections de support (16, 17) et les première et deuxième sections d'extension (18, 19).

5. Presse-étoupe (50) selon l'une ou plusieurs des revendications précédentes, **caractérisé en ce que** la première section de support (16) et la deuxième section de support (17) sont approximativement de même longueur.

6. Presse-étoupe (50) selon l'une ou plusieurs des revendications précédentes, **caractérisé en ce que** l'élément de contact (10) est conçu en forme d'anneau ou de tore.

7. Presse-étoupe (50) selon une ou plusieurs des revendications précédentes, **caractérisé en ce que** l'élément de contact comprend un composant (52) avec une chambre (53) qui est délimitée radialement par rapport à un axe longitudinal central (22) par une paroi intérieure (54) et le long de l'axe longitudinal central (22) par au moins un renforcement (58) au moins partiellement périphérique.

8. Presse-étoupe (50) selon la revendication 7, **caractérisé en ce que** la première et/ou la deuxième section d'extension (18, 19) s'appuie au moins partiellement sur l'au moins un renforcement (58) au moins partiellement périphérique et/ou sur la paroi frontale.

9. Presse-étoupe selon l'une ou plusieurs des revendications précédentes, **caractérisé en ce qu'**au moins une section de retenue (14) du au moins un élément de contact (10) s'appuie sur une paroi intérieure (54) d'un composant (52) du presse-étoupe (50).

10. Presse-étoupe (50) selon une ou plusieurs des revendications précédentes, **caractérisé en ce que** le au moins un élément de contact (10) est logé dans une chambre (53) d'un composant (52) qui présente au moins un filetage extérieur (56), dans lequel au moins une pièce allongée (60) est guidable à travers le composant (52).

11. Presse-étoupe (50) selon l'une ou plusieurs des revendications précédentes, comprenant au moins une pièce allongée (60) qui est disposée au moins partiellement dans une chambre (53) avec le au moins un élément de contact (10), dans lequel le presse-étoupe (50) et la au moins une pièce allongée (60) forment un ensemble assemblé, dans lequel, à l'état monté, dans lequel l'au moins une première et une deuxième sections d'appui (16, 17) de chaque spire de l'au moins un élément de contact (10) s'appliquent au moins partiellement contre un blindage (62) de la pièce moulée allongée (60) et les spires (12) s'écartent d'une orientation radiale.

12. Utilisation d'un presse-étoupe (50) selon l'une ou plusieurs des revendications précédentes pour une mise en contact électrique d'au moins un blindage d'au moins une pièce de forme allongée.
